# EUROPEAN PATENT APPLICATION

(11) **EP 1 681 087 A2**
(43) Date of publication of application: **19.07.2006**
(21) Application number: 06000570.9
(22) Date of filing: 12.01.2006
(51) Int. Cl.: B01D 46/52

(54) **A pleated corrugated media and method of making**

(30) Priority: 12.01.2005 US 34026
(71) Applicant: AAF-McQuay Inc., Louisville KY 40223 (US)
(72) Inventor: Choi, Kyung-Ju, Louisville Kentucky 40241 (US)
(74) Representative: Schwabe - Sandmair - Marx

(57) **Abstract**

A filter comprising a single length of filter material with a longitudinal axis wherein the length of filter material has a contour of elongated depressions and swells or apices substantially parallel to the longitudinal axis, the filter material further has folds substantially perpendicular to the longitudinal axis of the filter material forming pleats at substantially equal intervals. A process of making the filter and apparatus used in the process are a part of the instant invention.

## Description

### FIELD OF INVENTION

The present invention relates to filters, such as gas or air filters, having pleated filter material wherein the pleated filter material is configured to maximize filtering capability.

### BACKGROUND OF THE INVENTION

Gas or fluid streams often carry particulate and/or contaminate materials. Often times, it is desirable or even necessary to remove some or most all of the particulate and/or contaminate materials from a gas or fluid flow stream, such as air intakes to engines, gas directed to gas turbines, air streams to various heating, ventilation, and air conditioning (HVAC) systems, and breathing air purifying systems. If a particulate material reaches the internal workings of the various mechanisms it can cause substantial damage. Also, if particulate material is recirculated through a HVAC system in a structure it can cause adverse health effects and/or allergic reactions to the inhabitants of the structure being heated or cooled. Therefore, removal of particulate material from a fluid or gas flow stream to is often desired and sometimes even necessary.

It has been a practice to produce filter material or media arranged in plurality of pleats having a zigzag pattern which provides a substantially increased filter area in relation to a flat filter having a perpendicular gas flow. Adjacent pleats are often times spaced apart from one another and held in the spaced orientation by spacers which are typically a solid or adhesive material that is adhered to adjacent pleats.

Other attempts have been made to increase the filter area or filter density and load capacity of filters. This has included the development of orthogonal flow filters. Typically, these orthogonal flow filters are made up of corrugated filter material being interposed with sheets of flat filter material. The corrugated filter material is adhesively connected to the flat sheet of filter material which forms a two ply sheet of filter material which is subsequently rolled or layered to form the filter element. Thus, the corrugated filter material forms flutes where the flutes are enclosed with a flat side of filter material. These flutes of filter material, at alternating ends of adjacent flutes, are sealed thus preventing continuous fluid transfer through a single flute. Having alternating flutes plugged at opposite ends of the filter provides for the fluid to enter the open flutes at a first end and pass through the wall of the flute or flat filter material to exit the filter through an adjacent flute having an open second end. This arrangement forces all the fluid or gas to pass through the filter material prior to exiting the filter. Filtering occurs when the fluid entering the first or intake end of the flute crosses through the flute walls to exit by the second or outlet end.

Other known filter arrangements have a filter structure in which mutually facing embossings of pleats of a filter material are glued to each other, in a folded or zigzag configuration, on their respective top sides. There has also been a trend for an increase in the embossing depth or height which results in an increase in the spacing of the pleats of filter material from each other in order to increase filtering surface area.

There are a variety of known materials used in the production of filter material or media, both synthetic and natural materials. These materials include cellulose, polyolefin, nylon, polyester, and other natural fibers and synthetic compositions. These fibrous materials are most often times formed into non- wovens such as wet laid, dri-laid, or polymer-laid forming fiber webs, fibrous mats, or other permeable filtering materials.

These filter materials have then been shaped or formed by various methods. Typically these methods include the use of rollers or embossing belts to form the filter material into a desired shape and pleating the shaped filter material. These forming steps may be accomplished with or without the application of heat. Also, the commonly practiced sealing method includes the application of a bead of sealant or hot melt to the filter media to join adjacent pleats and/or to seal flutes.

These filters are typically housed in a variety of structures. Pleated paper filters with rigid housings have long been the industry standard for many filtering applications. It may be desirable for a housing structure to provide support to the filter material. For instance, rectangular, square and circular configured housings have been used to provide such.

There has been and remains a variety of problems associated with the filters of the prior art. The application of adhesive or hot melt materials has been the source of many of these problems. These problems are exemplified in the construction of the orthogonal flow filters of the prior art. The glue or hot melt often times plugs adjacent flutes, provides a non-smooth gas inlet and/or outlet face which increases the pressure gradient across the filter, and introduces non-filtering or non-permeable material into the filter. All of these conditions compromise filter efficiency and/or capacity. Often times the hot melt fails to completely seal a flute thus allowing gas to flow through the filter without being filtered which is critical in the operation of the filter and greatly diminishes the filtering efficiency of the filter. Additionally, the type of material used to make up the filter media may be limited to materials that are compatible with and adhesive to the hot melt as well as material that retains its structure and composition when exposed to heat.

The hot melt or adhesive application, whether applied between pleats or injected into each appropriate flute end, is labor intensive and does not lend itself well to efficient automated production methods. This causes significant problems associated with product performance and manufacture and cost.

Other problems with current production methods include the tearing or shredding of the filter material when it is being formed or shaped. The typical roller configurations used to form filter material require the process to be run at a slow speed, have many rollers in series, and may require the application of a large amount of heat or chemical additives to avoid tearing the filter material.

Yet, additional problems associated with current filters entail the composition of the filter materials. The composition of materials often times require physical properties that permit the material to be shaped or formed, to have resistance to the degradative effects of humidity, heat, air flow, chemicals and mechanical stress or impact, and to provide the desired permeability, porosity, and efficiency.

Therefore, there exists need in the filtration industry to maximize filter life while simultaneously trying to reduce filter size, weight, and costs.

### SUMMARY OF THE INVENTION

The instant invention is a filter and a process and apparatus for making same. The filter comprises a plurality of pleats of filter material wherein the pleats are joined at folds at substantially equal intervals in the filter material and arranged in a zigzag pattern. The pleats each have a pattern of ridges and troughs forming flutes or apices wherein the ridges on one pleat may engage the troughs on an adjacent pleat. The filter has an inlet end and an outlet end each having a plurality of flute faces and interposed voids.

The contour of ridges and troughs is a corrugation in the filter material wherein the corrugation is a series of flutes, the flutes have a height and pitch specifically designed to increase the area of filter material within a given volume of filter housing. Several filter housings and filter configurations are claimed herein. A filter arrangement wherein the filter material is joined together at swells or ridges and depressions or troughs with strips of material between said pleats is also claimed herein. The pleated corrugated media of the present invention may be produced by several alternative methods and such methods are presently claimed as well as several embodiments of apparatuses used to form the material.

### BREIF DESCRIPTION OF THE DRAWINGS

FIG. 1 is an isometric, exploded, partial view of an embodiment of the pleated filter of the present invention showing a length of filter material having a contoured surface and fold lines forming pleats;
FIG. 2 is an end view of an embodiment of the pleated filter of the present invention showing an inlet or outlet end of the filter;
FIG. 2a is a side view of an embodiment of the pleated filter of the present invention showing the inlet and outlet ends of the filter and flutes therebetween;
FIG. 3 is an isometric, cut-away view of an embodiment of the filter of the present invention showing a flow pattern of a substance being filtered;
FIG. 4 is an isometric view an embodiment of the presently claimed invention showing flute ends having a recess;
FIG. 5 is an alternative embodiment of the contour of the corrugated pleats of the present invention;
FIG. 6 is an isometric, exploded, partial view of another alternative embodiment of the pleated filter of the present invention showing a length of filter material having a contoured surface of apices and fold lines forming pleats;
FIG. 7 is a process illustrating material forming steps using rollers in producing several embodiments of the filter of the present invention;
FIG. 8 is an alternative embodiment of a process illustrating the use of contour forming belts used in producing embodiments of the filter of the presently claimed invention;
FIG. 9 shows an embodiment of contour formers used in the process of FIG 7;
FIG. 10 is an alternative embodiment of the contour formers used in the process of FIG 7;
FIG. 11 is a front cut-away view of an alternative embodiment of one of a set of opposing scoring patterns;
FIG. 11A is a front cut-away view of an embodiment of an alternative opposing scoring pattern of FIG. 11;
FIG. 11B is a cross-sectional view of the alternative embodiment of a scoring pattern of FIG. 11;
FIG. 11C is a cross-sectional view of the alternative embodiment of a scoring pattern of FIG. 11A;
FIG. 12 is an isometric view of an embodiment of the presently claimed filter contained in a rectangular filter housing;
FIG. 13 is an isometric view of an embodiment of the presently claimed filter contained in a rectangular filter housing where the filter is expanded;
FIG. 14 is an isometric view of an embodiment of the presently claimed filter arranged in a circular configuration.

### DETAILED DESCRIPTION OF THE PREFERRED EMBODIMENTS

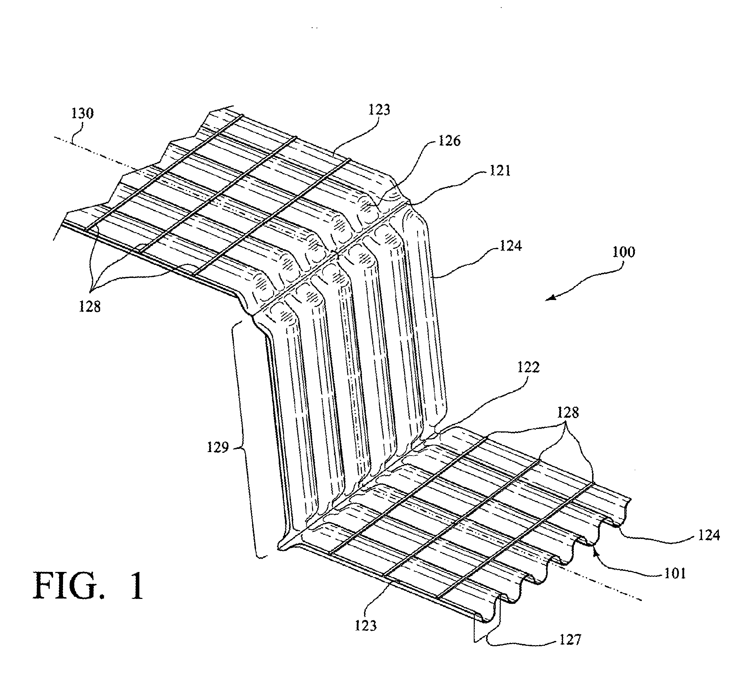

FIG. 1 shows an embodiment of the pleated filter 100 of the present invention showing a length of filter material 101 having a contoured surface. Filter material 101 may be made up of any suitable filter material. The filter material may have natural materials, synthetic materials, or a combination of both natural and synthetic materials. For example, the filter material may be comprised of cellulose, synthetic, or a combination of synthetic and natural materials. Polyester fibers have been found to be an example of a good synthetic filter material. An economical moisture resistant filter material has been found to be about 80% cellulose and about 20% synthetic (i.e. polyester), excluding binders. The natural and/or synthetic fibers may be wet laid using water, dri-laid (i.e. chemical bonded, resin bonded, needle punched, or thermally bonded), polymer-laid (i.e. melt blowing, electro-spining or spunbonding), or processed by other known means to produce the filter material.

Filter 100 is comprised of a single length of filter material 101 having longitudinal axis 130 wherein length of filter material 101 has a contour of elongated depressions and swells substantially parallel longitudinal axis 130. Fold or score lines 121 and 122 are substantially perpendicular to axis 130 at substantially equal intervals in filter material 101. Fold or score lines 121 and 122 may be substantially linear depressions which enable pleats 129 to be easily arranged in a zigzag pattern. When pleats 129 are arranged in a zigzag pattern, an elongated swell in length of filter material 101 becomes swells 123 interposed with depressions 124 on alternating pleats 129. Score lines 121 become outlet folds 121 and score lines 122 become inlet folds 122. On each pleat 129 are swells 123 with adjacent depressions 124 forming flutes 127. Also shown here are optional strips of material 128 which when adhered to swells 123 and/or depressions 124 serve to retain flutes 127 in a desired form. Flute faces 126, shown as being tapered in this embodiment; primarily make up the outlet surface of filter 100 when filter material 101 is arranged in a zigzag pattern.

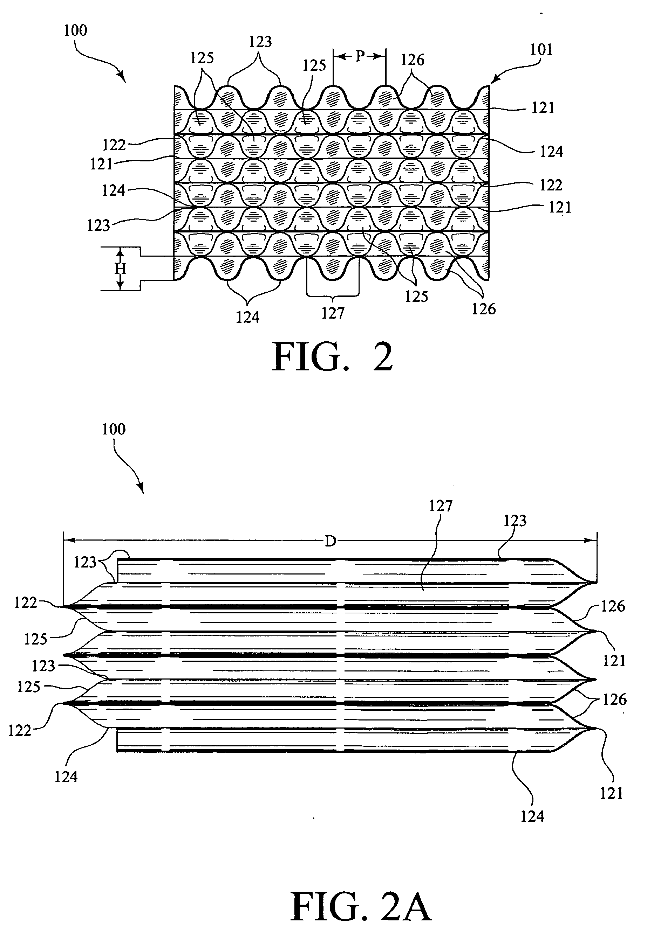

FIG. 2 shows an end view of an embodiment of the pleated filter 100 having filter material 101 arranged in a zigzag pattern. Shown here is an inlet or outlet end of filter 100, the terms inlet and outlet are used for clarity only and shall not be interpreted as limitation on the presently claimed invention as they may be interchanged. Flutes 127 have a height H and pitch P. Pitch P is the width between upper or lower most surfaces of adjacent flutes 127. Advantageously, height H is between about one eighth to about seven eights of pitch P. More advantageously, height H is about one fourth to about three fourths of pitch P and most advantageously height H is about half of pitch P. Height H is advantageously in a range of approximately 0.1 to 25 mm, more advantageously in a range of approximately 1 to 10 mm, and most advantageously is approximately 5 mm. Flutes 147 advantageously have a pitch P in a range of approximately 1 to 50 mm, more advantageously in a range of approximately 5 to 20 mm, and most advantageously approximately 10 mm. Also shown here are inlet flute ends 125 and outlet flute ends 126. In this embodiment inlet flute ends 125 and outlet flute ends 126 are tapered which provides filter 100 with a more aerodynamic gas flow through filter 100 thus reduces the pressure drop of the gas across filter 100.

FIG. 2a is a side view of the embodiment of filter 100 having tapered inlet flute ends 125 and tapered outlet flute ends 126 and showing depth D of filter 100. Advantageously depth D of filter 100 is at least 10 mm. Shown in this embodiment are the bottom edges of elongated depressions 124 and the top of swells 123 in said filter 100 wherein flutes 127 have a substantially consistent height between inlet folds 122 and outlet folds 121.

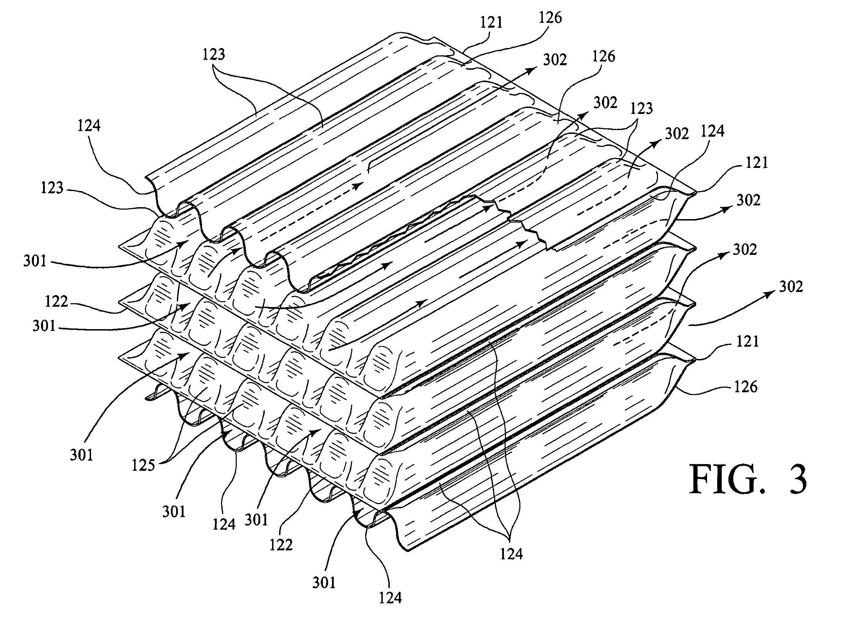

FIG. 3 is an isometric, cut-away view of an embodiment of filter 100 showing a flow pattern of a substance being filtered. Filter 100 is primarily designed to filter and clean gases such as air. Inlet gas flow path 301 shows most of the gas entering filter 100 through the voids between inlet flute ends 125. A portion of gas also enters through inlet folds 122 and inlet flute ends 125 and follow outlet gas flow path 302. The majority of the gas entering filter 100 through the voids between inlet flute ends 125 passes through ridges 123 or depressions 124 to outlet gas flow path 302. Gas outlet path 302 is shown as following the void space between outlet flute ends 126. It is to be understood that a portion of the gas exits filter 100 through outlet flute ends 125 and outlet folds 121.

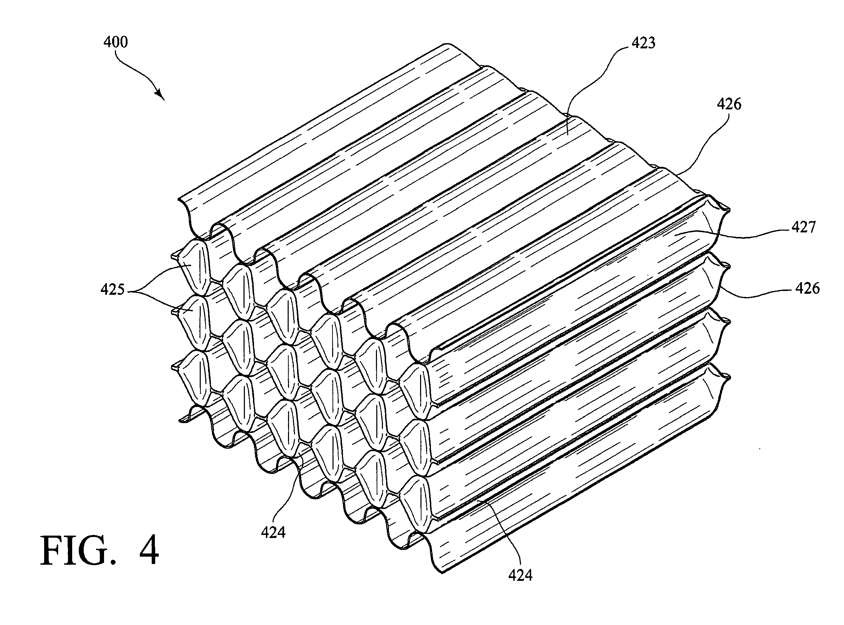

FIG. 4 is an alternative embodiment of the filter of the presently claimed invention. Filter 400 has inlet flute ends 425 and outlet flute ends 426. Inlet flute ends 425 have an inward depression, indentation, or dimple configuration toward flute 427 and outlet flute end 426. This configuration of inlet flute end 425 and outlet flute end 426 provides a higher degree of resistance to a radial force that may be placed on flute 427. This helps flutes 427 to retain the desired configuration of swells 423 and depressions 424 and inhibits the collapsing of filter 400.

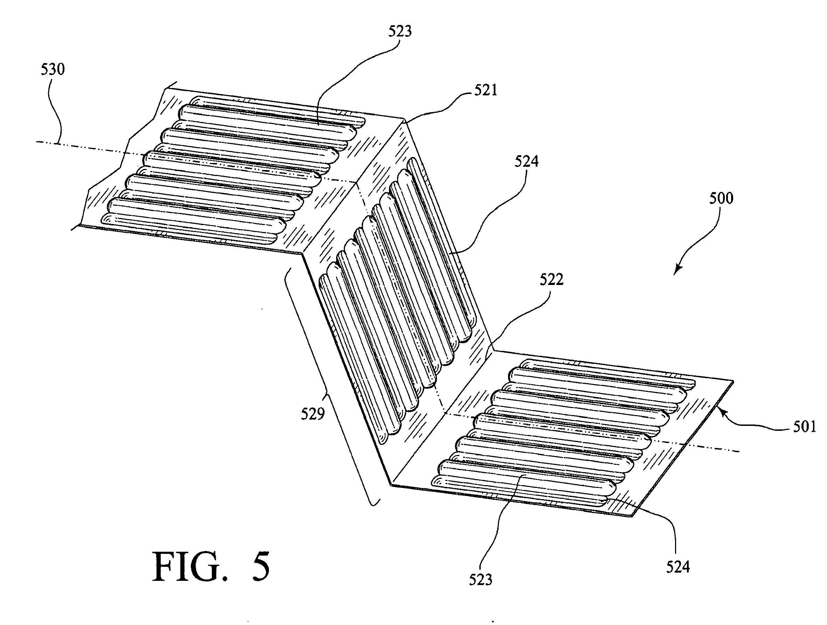

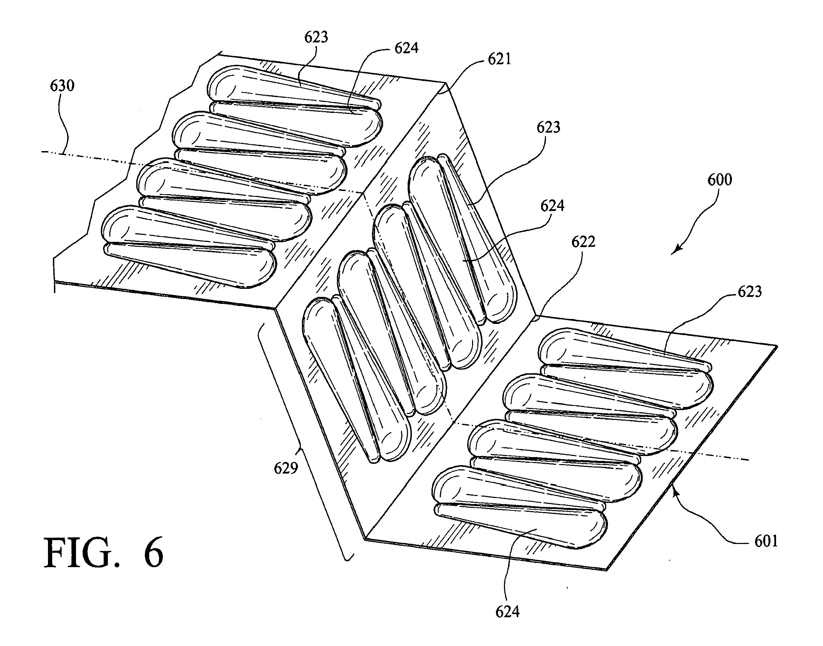

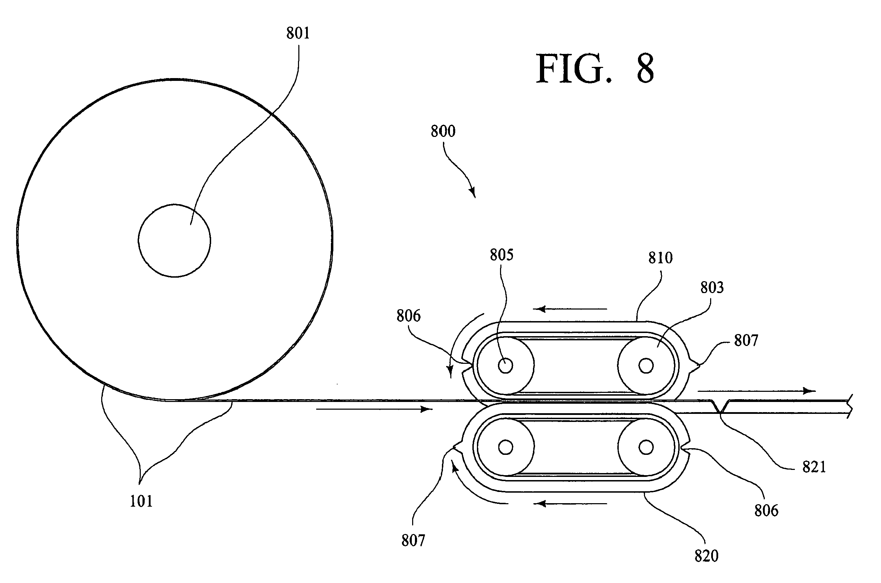

FIGs. 5 and 6 show alternative embodiments 500 and 600 of the pleated filter of the present invention. Filter 500 is comprised of filter material 501 and has longitudinal axis 530. Filter material 501 is folded at score lines 522 and 521 forming pleats 529. Pleats 529 have a succession of ridges 523 and valleys 524 substantially parallel to axis 530. Filter 500 is typically formed with the process shown in FIG 8. Filter 600 is comprised of filter material 601 and has longitudinal axis 630. Filter material 601 is folded at score lines 622 and 621 forming pleats 629. Pleats 629 have a succession of alternating apex or triangular shaped ridges 623 and apex or triangular shaped valleys 624. These apices 623 and 624 form flutes having a more aerodynamic configuration and thus a lowered resistance to air flow through filter 6001. Filter 600 is typically formed with the process shown in FIG 8.

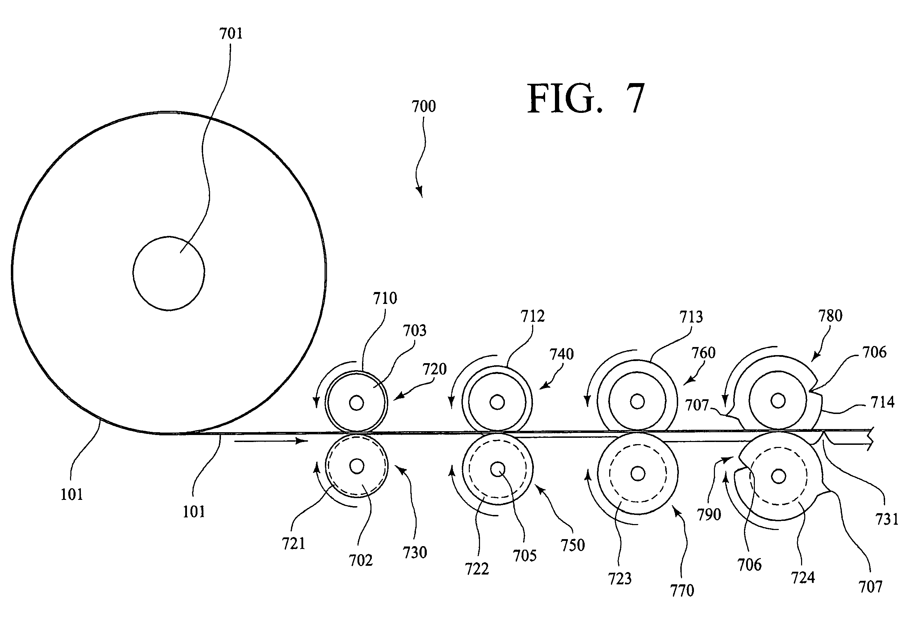

FIG. 7 shows process 700 illustrating the material forming steps in producing an embodiment of the pleated corrugated filter media of the present invention. Spool 701 has elongated filter material 101 spooled thereon. Filter material 101 is formed with rollers and optional heat application. The heat may be supplied in the form of radiant heat from above and/or below the rollers, supplied directly to the rollers themselves (i.e. steam injected into rollers), or heat may be supplied by other means known to one skilled in the art. Process 700 comprises a plurality of opposing contour formers where each set of opposing contour formers further shapes filter material 101 into a desired shape. Each set of opposing contour formers incrementally modifies the shape of filter material 101 toward a final desired shape without placing excess tensile stress on filter material 101 thus preventing tearing or shredding of filter material 101.

Filter material 101 is first formed by a first set of opposing rollers 720 and 730. Roller 720 has core 703 and forming surface 710. Opposing roller 730 has core 702 and forming surface 721. Forming surfaces 410 and 421 cooperate with one another to form filter material 101 into a desired shape without placing excess tensile stress on filter material 101 thus preventing the tearing of filter material 101. A second set of opposing rollers 740 and 750 further shape filter material 101 into a desired pattern or corrugation. Roller 740 has forming surface 712. Opposing roller 750 has spindle 705 and forming surface 722. Forming surfaces 712 and 722 cooperate with one another to further form filter material 101 into a desired shape without placing excess tension on filter material 101. Opposing rollers 760 and 770 have opposing contour forming surfaces 713 and 723 which cooperate with each other to further form filter material 101 into a desired shape. A plurality of additional opposing rollers may follow rollers 760 and 770 to further define the shape of filter material 101. A final set of opposing contour formers 780 and 790 are shown having forming surfaces 714 and 724. Forming surfaces 714 and 724 have a pitch and height or depth of ridges which corresponds to the desired pitch and height or depth of ridges in a finished pleated media. Also shown on final set of opposing contour formers 780 and 790 are scorers 706 and 707. In the embodiment shown here there are two male scoring surfaces 707 and two female scoring surfaces 706 on rollers 780 and 790. It is to be understood that there may be one or many of scoring surfaces 706 and 707 on the final set of opposing contour formers 780 and 790.

FIG. 8 shows an alternative embodiment of process 800 of the present invention showing an opposing set of belt contour formers 810 and 820. Spool 801 has elongated filter material 101 spooled thereon. Filter material 101 is formed with belts and optional heat application. The heat may be supplied in the form of radiant heat from above and/or below the rollers, supplied directly to the rollers themselves (i.e. steam injected into rollers), or heat may be supplied by other means known to one skilled in the art. Process 800 comprises a set of opposing contour forming belts 810 and 820. Filter material 101 is formed by a set of opposing belts 810 and 820 where each belt has a contour forming surface. The forming surfaces on belts 810 and 820 cooperate with one another to form filter material 101 into a desired shape. Also shown on opposing contour forming belts 810 and 820 are scorers 806 and 807. In the embodiment shown, there are two male scoring surfaces 807 and two female scoring surfaces 806 on belts 810 and 820. It is to be understood that there may be one or many of scoring surfaces 806 and 807 on opposing contour forming belts 810 and 820.

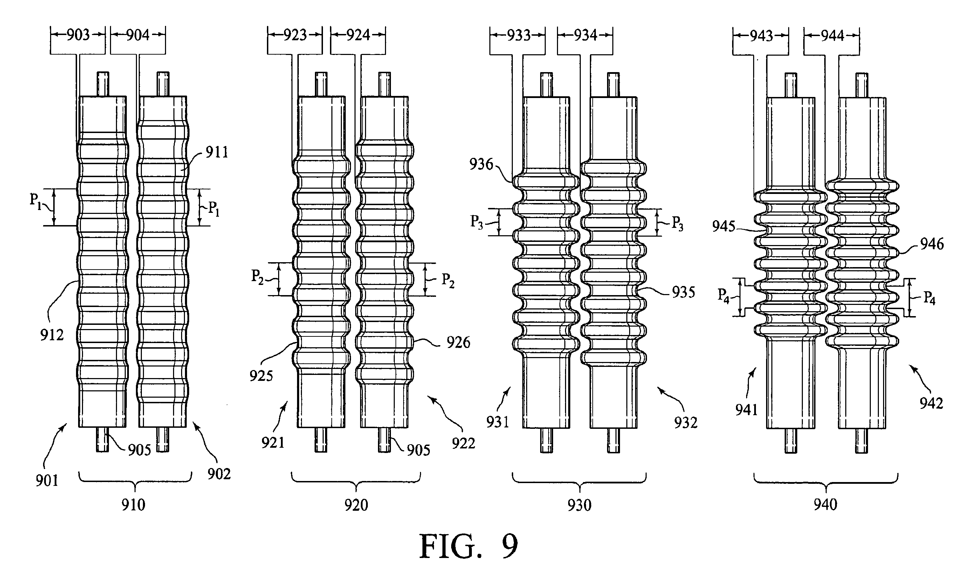

FIG. 9 shows an embodiment of contour formers used in the process of FIG 7. Each set of opposing contour formers shown incrementally modifies the shape of filter material 101 toward a final desired shape without placing excess tensile stress on filter material 101 thus preventing tearing or shredding of filter material 101. In this embodiment each successive pair of a plurality of opposing contour formers or rollers increases the depth of the corrugation of filter material 101.

A first set of opposing rollers 910 has a roller 901 with valleys or depressions having depth 903 and pitch P1. The opposing roller 902 in set 910 has ridges 911 with height 904 and pitch P1. Height 904 is substantially equivalent to depth 903, thus rollers 901 and 902 cooperate to form shallow ridges and valleys in filter material 101. Also shown here are spindles 905 that serve to rotatably mount the rollers on a rack. A second set of opposing rollers 920 has a roller 921 with valleys 925 having depth 923 and pitch P2. The opposing roller 922 in set 920 has ridges 926 with height 924 and pitch P2. Height 924 is substantially equivalent to depth 923, thus rollers 921 and 922 cooperate to further form the ridges and valleys in filter material 101. Height 924 and depth 923 are greater than height 904 and depth 903 and P1 is greater than P2. Additionally, a distance along the surface of roller 901 between the centers of adjacent valleys 912 is substantially equal to a distance along the surface of roller 921 between the centers of adjacent valleys 925.

A third and fourth set of opposing rollers further define the contour of filter material 101. Third set of opposing rollers 930 has a roller 932 with valleys 935 having depth 934 and pitch P3. The opposing roller 931 in set 930 has ridges 936 with height 933 and pitch P3. Height 933 is substantially equivalent to depth 934, thus rollers 931 and 932 cooperate to further form ridges and valleys in filter material 101. Height 933 and depth 934 are greater than height 924 and depth 923 and P2 is greater than P3. Additionally, a distance along the surface of roller 932 between the centers of adjacent valleys 935 is substantially equal to a distance along the surface of roller 921 between the centers of adjacent valleys 925 which is substantially equal to a distance along the surface of roller 901 between the centers of adjacent valleys 912. A fourth set of a plurality of rollers is shown here, however it is to be understood that any number of sets of opposing rollers may be used to form filter material 101 into a desired shape. Fourth set of opposing rollers 940 has a roller 941 with valleys 945 having depth 943 and pitch P4. The opposing roller 942 in set 940 has ridges 946 with height 944 and pitch P4. Height 944 is substantially equivalent to depth 943, thus rollers 941 and 942 cooperate to further form ridges and valleys in filter material 101. Height 944 and depth 943 are greater than height 933 and depth 934 and P3 is greater than P4. Additionally, a distance along the surface of roller 941 between the centers of adjacent valleys 945 is substantially equal to a distance along the surface of roller 932 between the centers of adjacent valleys 935 which is substantially equal to a distance along the surface of roller 921 between the centers of adjacent valleys 925 which is substantially equal to a distance along the surface of roller 901 between the centers of adjacent valleys 912.

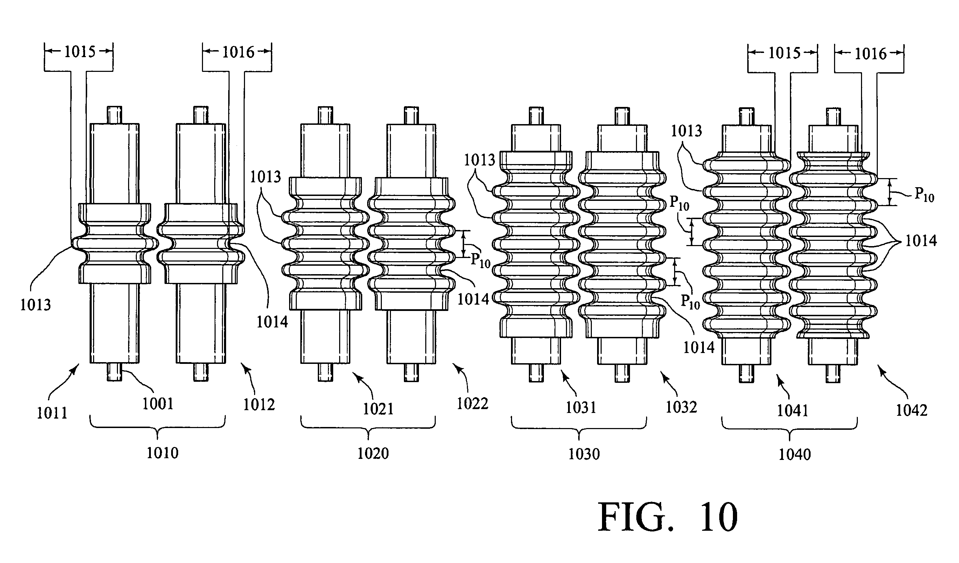

FIG. 10 is an alternative embodiment of the contour formers used in the process of FIG 7. In this embodiment too, each set of opposing contour formers shown incrementally modifies the shape of filter material 101 toward a final desired shape without placing excess tensile stress on filter material 101 thus preventing tearing or shredding of filter material 101. However, in this embodiment each successive pair of a plurality of opposing contour formers or rollers increases the number of flutes in the corrugation of filter material 101.

A first set of opposing rollers 1010 has a roller 1011 with a single ridge 1013 which cooperates with a single valley 1014 in roller 1012 to form a single flute in filter material 101. Height 1015 is substantially equivalent to depth 1016 and remains substantially equivalent for each successive set of opposing rollers. Also shown here are spindles 1101 that serve to rotatably mount the rollers on a rack. A second set of opposing rollers 1020 has a roller 1022 with three valleys 1014 having depth 1016 and pitch P10. The opposing roller 1021 in set 1020 has three ridges 1013 with height 1015 and pitch P10. A third set of opposing rollers 1030 has a roller 1032 with five valleys 1014 having depth 1016 and pitch P10. The opposing roller 1031 in set 1030 has five ridges 1013 with height 1015 and pitch P10. A fourth set of opposing rollers 1040 has a roller 1042 with seven valleys 1014 having depth 1016 and pitch P10. The opposing roller 1041 in set 1040 has seven ridges 1013 with height 1015 and pitch P10.

This configuration of rollers provides for making a first flute near the center of filter material 101. Each successive opposing pair of rollers adds a flute on each side of the flutes created by the previous set of opposing rollers. However, it is to be understood that more than one flute may be initially created and successively added to each side of the flutes created by the previous set of opposing rollers and still be within the scope of the presently claimed invention.

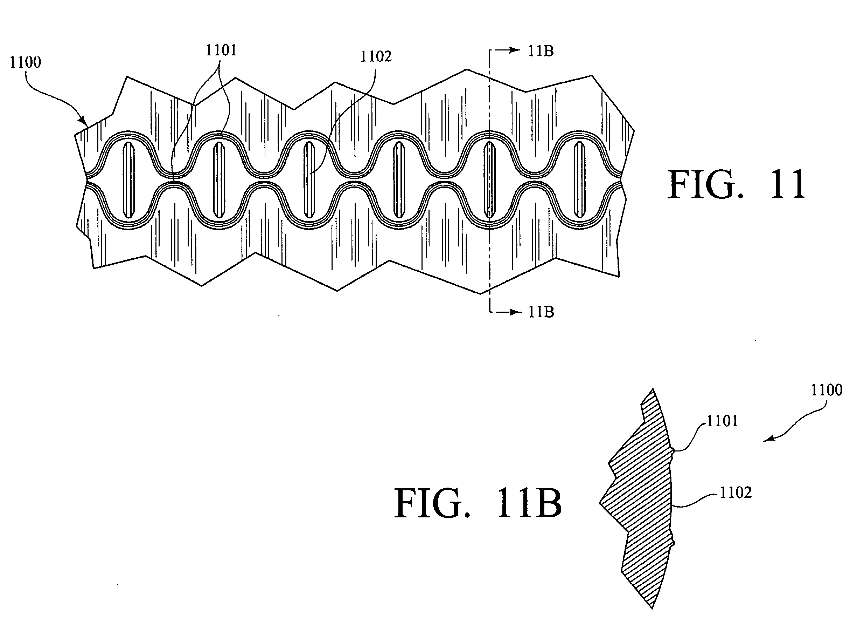

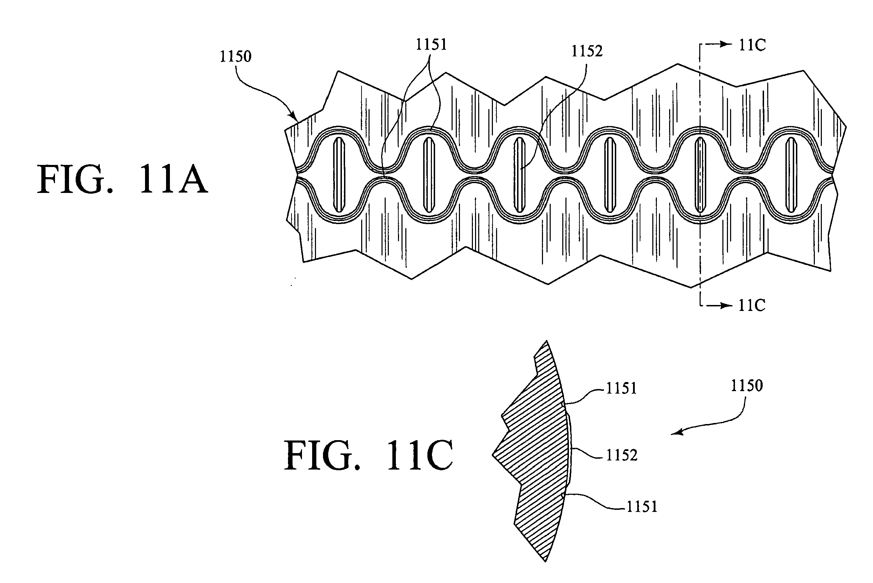

FIG. 11 shows an embodiment of a scoring pattern 1100 that may be on one of the final set of opposing rollers of the process of FIG.7 or on the forming belts of the process shown in FIG. 8. Scoring pattern 1100 has an upper and lower wave pattern 1101 and a plurality of vertical linear patterns 1102 within upper and lower wave patterns 1101. FIG. B is a cross-sectional view of scoring pattern 1100 showing upper and lower wave patterns being male or extending outward from a contour former and the plurality of vertical linear patterns 1102 being female or extending inward from a contour former. Scoring pattern 1100 may have an opposing surface on the other of the final set of opposing rollers that is yielding or malleable or alternatively may have an opposing surface as shown in FIG. 11A. FIG. 11A shows an embodiment of an opposing scoring pattern of that shown in FIG. 11 that may be on the other of the final set of opposing rollers of the process of FIG.7 or on the forming belts of the process shown in FIG. 8. Therefore, scorers 1100 and 1150 may replace scorers 706 and 707 and/or scorers 806 and 807. Scorers 1100 and 1150 cooperate to form a pleat face in a folded filter as shown in FIG. 4. As seen in FIG. 11A and cross-sectional view FIG. 11C, upper and lower protruding wave forms 1101 have a lower part of a wave on the upper wave form that nears an upper part of a wave in the lower wave form. Near a center of the rounded protrusions made by upper and lower forms 1101 is an indentation line 1102 which is placed in a transverse direction with respect to the length of wave forms 1101. FIG. 11A shows a cooperating scorer having upper and lower indentations 1151 that are shaped to receive upper and lower wave forms 1101. Near a center of the rounded indentations made by upper and lower indentations 1151 is an outward extending line 1152 which is placed to receive protruding line 1102.

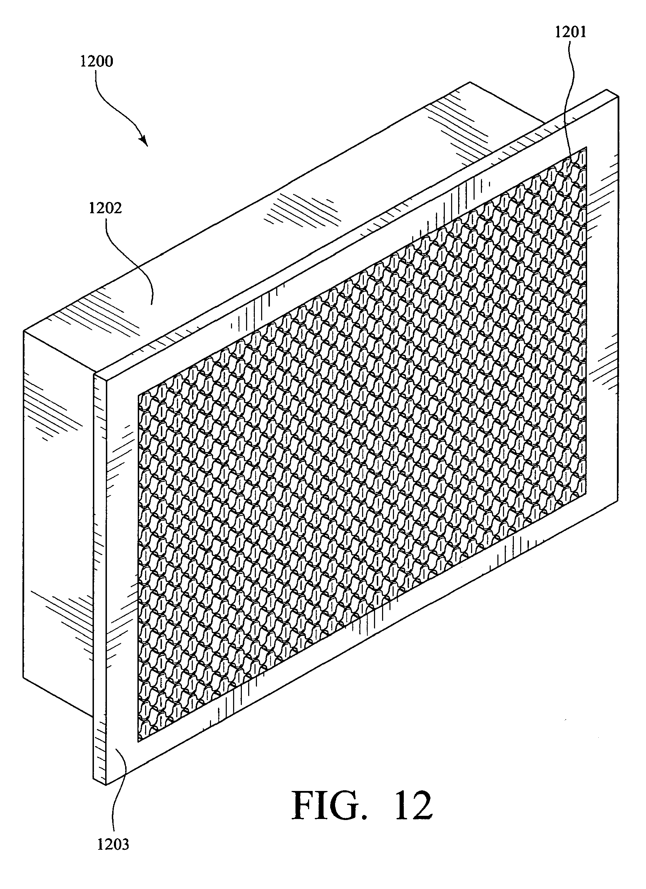

FIG. 12 is an isometric view of an embodiment of the presently claimed pleated filter 1201 contained in rectangular or square filter housing 1200 having two opposing side walls, a top wall and a bottom wall. Filter housing 1200 has flanges inwardly depending from the top wall, top wall, and two opposing side walls. Filter housing 1200 has a face 1203 that may extend outwardly from rectangular of square filter box 1202. It is to be understood that the outward extension of face 1203 is optional. Filter box 1202 has an open front that exposes the inlet face of the filter of the present invention and an open rear that exposes the outlet of the filter of the present invention. Filter box 1202 prevents air or gas from bypassing the flutes in filter material 1201 and consequently guides the inlet gases through filter material 1201.

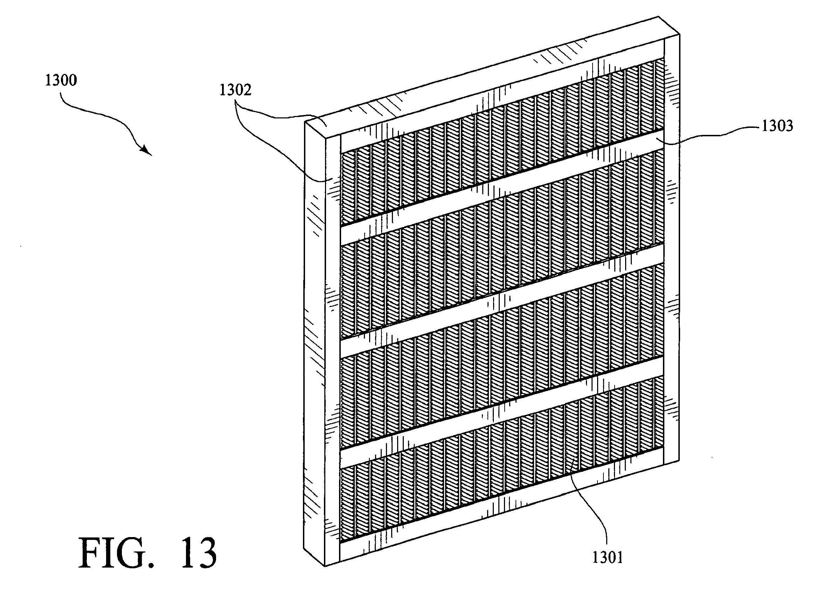

FIG. 13 shows the presently claimed filter contained in rectangular filter housing 1302 where filter 1301 is expanded. Rectangular or square housing 1302 surrounds the sides, top, and bottom edges of filter 1301 thus guiding all of the inlet gas through filter 1301. Cross members 1303 are optional for providing support for filter 1301. Shown here are horizontal cross members 1303, however there may also be vertical cross members 1303. Additionally, filter 1301 is shown as being in an expanded configuration within housing 1302 where the flutes or depressions and ridges of adjacent pleats either only contact each other at the inside fold or may not contact one another at all.

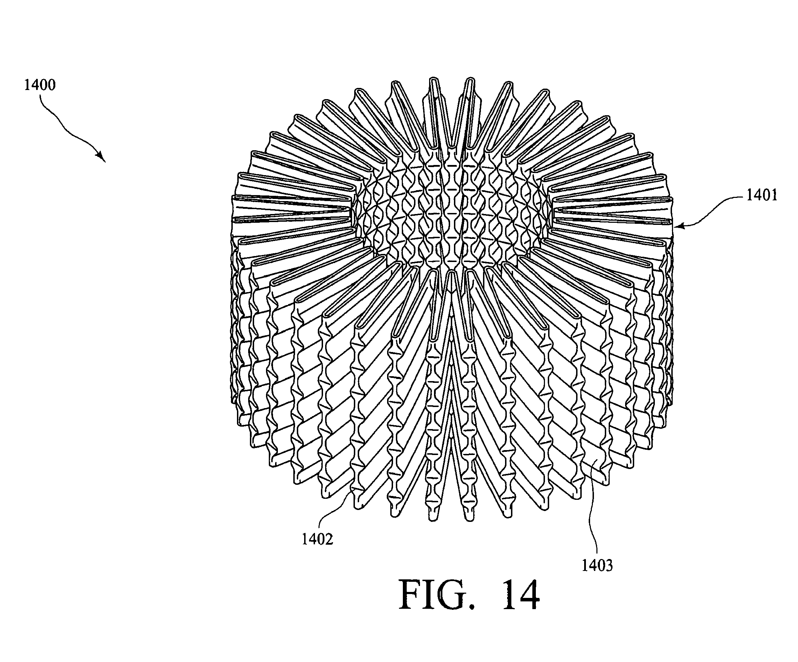

FIG. 14 shows the presently claimed filter 1400 arranged in a circular configuration. Filter 1400 has flutes 1403 on pleats arranged in a circular zigzag pattern where flutes 1403 of adjacent pleats may contact each other at the inside folds. Shown here is filter material 1401 having pleat faces 1402 which have a dimple configuration that may be formed by the scorers shown in FIGs. 11-11C.

## Claims

1. A filter comprising a single length of filter material with a longitudinal axis wherein said length of filter material has a contour of elongated depressions and swells substantially parallel to said longitudinal axis, said filter material further having fold lines substantially perpendicular to said longitudinal axis of said filter material wherein said length of filter material is folded at said fold lines forming pleats at substantially equal intervals.

2. The filter of Claim 1 wherein said contour of elongated depressions and swells on one of said pleats engage said contour of elongated depressions and swells on adjacent pleats.

3. The filter of Claim 1 wherein said contour of elongated depressions and swells is a corrugation in said filter material wherein said corrugation is a series of flutes, said flutes have a height in a range of approximately .1 to 25 mm.

4. The filter of Claim 3 wherein said flutes have a height in a range of approximately 1 to 10 mm.

5. The filter of Claim 4 wherein said flutes have a height of approximately 5 mm.

6. The filter of Claim 1 wherein said contour of elongated depressions and swells is a corrugation in said filter material wherein said corrugation is a series of flutes, said flutes have a pitch in a range of approximately 1 to 50 mm.

7. The filter of Claim 6 wherein said flutes have a pitch in a range of approximately 5 to 20 mm.

8. The filter of Claim 7 wherein said flutes have a pitch of approximately 10 mm.

9. The filter of Claim 6 wherein said flutes have a height in a range of approximately .1 to 25 mm.

10. The filter of Claim 6 wherein said flutes have a height in a range of approximately 1/8 to 7/8 of said pitch.

11. The filter of Claim 6 wherein said flutes have a height of approximately one half of said pitch.

12. The filter of Claim 1 wherein said filter has a depth, said depth being a distance along said longitudinal axis between said fold lines, said depth of said filter being at least 10 mm.

13. The filter of Claim 1 wherein said contour of elongated depressions and swells is a series of apices.

14. The filter of Claim 1 wherein said contour of elongated depressions and swells is a corrugation in said filter material wherein said corrugation is a series of flutes, said flutes have a substantially consistent height between said fold lines.

15. The filter of Claim 1 wherein said single length of filter material is joined together at said swells and depressions with strips of material between said pleats.

16. The filter of Claim 1 wherein said single length of filter material is comprised of a synthetic and a natural material.

17. The filter of Claim 16 wherein said natural material is cellulose and said synthetic material is polyester, said single length of filter material has about 80% cellulose and about 20% polyester, said percentages of cellulose and polyester being based upon a total weight of said filter material minus any optional binders.

18. The filter of Claim 1 wherein said single length of filter material is made from a wet laid process.

19. The filter of Claim 1 wherein said single length of filter material is made from a dri-laid process.

20. The filter of Claim 1 wherein said single length of filter material is made from a polymer-laid process.

21. The filter of Claim 1 wherein said pleats have an inlet end and an outlet end; said inlet and said outlet ends have a taper from said fold lines.

22. The filter of Claim 1 wherein said pleats have an inlet end and an outlet end; said inlet and said outlet ends have an indentation approximate to said fold lines.

23. The filter of Claim 1 wherein said single length of filter material is contained in a rectangular housing, said rectangular housing having two opposing side walls, a top wall and a bottom wall, said two opposing side, top and bottom walls each having a front and rear end.

24. The filter of Claim 23 wherein said front ends have an outwardly extending face.

25. The filter of Claim 1 wherein said single length of filter material is contained in a rectangular housing, said rectangular housing having two opposing side walls, a top wall and a bottom wall, said two opposing side, top and bottom walls each having a front and rear end where said front and rear ends have inwardly extending flanges and inwardly depending cross members spanning between said side walls, said single length of filter material being expanded where said depressions and said swells on adjacent pleats have a space therebetween.

26. The filter of Claim 1 wherein said single length of filter material is arranged in a circular configuration.

27. The filter of Claim 26 wherein said depressions and said swells of adjacent pleats engage each other at an inside of said fold lines and have a space between said depressions and said swells between said fold lines.

28. A filter comprising a plurality of pleats wherein said pleats are joined at folds and arranged in a zigzag pattern, said pleats having a first end with a first plurality of said folds and a second end with a second plurality of said folds, said first end being either an inlet or an outlet, said second end being the other of said inlet or outlet, said pleats each having a pattern of ridges and troughs wherein said ridges on one pleat substantially align with said troughs on an adjacent pleat.

29. The filter of Claim 28 wherein said ridges on one of said pleats engage said troughs on said adjacent pleat.

30. The filter of Claim 28 wherein said pattern of ridges and troughs form a pleat height in a range of approximately 0.1 to 25 mm.

31. The filter of Claim 30 wherein said pleat height is in a range of approximately 1 to 10 mm.

32. The filter of Claim 31 wherein said pleat height is approximately 5 mm.

33. The filter of Claim 28 wherein said ridges have a pitch between adjacent ridges on a pleat, said pitch between said adjacent ridges being in a range of approximately 1 to 50 mm.

34. The filter of Claim 33 wherein said pitch between said adjacent ridges being in a range of approximately 5 to 20 mm.

35. The filter of Claim 34 wherein said pitch between said adjacent ridges is approximately 10 mm.

36. The filter of Claim 33 wherein said pattern of ridges and troughs form a pleat height in a range of approximately 0.1 to 25 mm.

37. The filter of Claim 33 wherein said pattern of ridges and troughs form a pleat height in a range of approximately 1/8 to 7/8 of said pitch.

38. The filter of Claim 28 wherein said filter has a depth, said depth being a distance between said inlet and outlet, said depth of said filter being at least 10 mm.

39. The filter of Claim 28 wherein said pattern of ridges and troughs is a series of apices.

40. The filter of Claim 28 wherein said pattern of ridges and troughs form a pleat height that is substantially consistent between said fold lines.

41. The filter of Claim 28 wherein said pleats are joined together with strips of material between adjacent pleats at said ridges and troughs.

42. The filter of Claim 28 wherein said filter has about 80% cellulose and about 20% polyester, said percentages of cellulose and polyester being based upon a total weight of said filter minus any optional binders.

43. The filter of Claim 28 wherein said filter is made from a wet laid process.

44. The filter of Claim 28 wherein said filter is made from a dri-laid process.

45. The filter of Claim 28 wherein said single length of filter material is made from a polymer-laid process.

46. The filter of Claim 28 wherein said inlet and said outlet ends have a taper from said folds.

47. The filter of Claim 28 wherein said inlet and said outlet ends have an indentation approximate to said folds.

48. The filter of Claim 28 wherein said filter is contained in a rectangular housing, said rectangular housing having two opposing side walls, a top wall and a bottom wall, said two opposing side, top and bottom walls each having a front and rear end.

49. The filter of Claim 48 wherein said front ends have an outwardly extending face.

50. The filter of Claim 28 wherein said single filter is contained in a rectangular housing, said rectangular housing having two opposing side walls, a top wall and a bottom wall, said two opposing side, top and bottom walls each having a front and rear end where said front and rear ends have inwardly extending flanges and inwardly depending cross members spanning between said side walls, said filter being expanded where said ridges and said troughs on adjacent pleats have a space therebetween.

51. The filter of Claim 28 wherein said filter is arranged in a circular configuration.

52. A filter having a sheet of filter material with substantially uniformly spaced alternating upstream and downstream folds forming a plurality of pleats, each of said plurality of pleats having flutes aligning with flutes on an adjacent pleat forming a filter inlet end having said upstream folds and a filter outlet end having said downstream folds.

53. The filter of Claim 52 wherein said flutes engage flutes on an adjacent pleat.

54. A process for making a filter comprising the steps of:
feeding filter material between at least one set of opposing contour formers wherein one of said at least one set of opposing contour formers has at least one ridge or valley and the other of said at least one set of opposing contour formers has the other of said at least one ridge or valley, said at least one ridge and said at least one valley cooperate with one another to form flutes in said filter material;
scoring said filter material having flutes at substantially uniform intervals forming score lines substantially perpendicular to a length of said flutes; and
pleating said fluted filter material at said score lines.

55. The process for making a filter of Claim 54 wherein said at least one set of opposing contour formers has a first set with one contour former having at least one first valley with a first depth and the other of said first set of opposing contour formers has at least one first ridge having a first height, said at least one first ridge having a first pitch and said at least one first valley having substantially said first pitch.

56. The process for making a filter of Claim 55 wherein said at least one set of opposing contour formers having a second set of opposing contour formers wherein said second set has a contour former with at least one second valley having a second depth and an opposing contour former with at least one second ridge having a second height, said at least one second ridge having a second pitch and said at least one second valley having substantially said second pitch, said second depth being greater than said first depth, said second height being greater than said first height, said second pitch being less than said first pitch.

57. The process for making a filter of Claim 56 wherein each of said opposing contour formers have a distance between a high point substantially central on said ridge and a low point substantially central on said valley thereon, said distance is substantially the same for each contour former.

58. The process for making a filter of Claim 54 wherein said at least one set of opposing contour formers are cylindrical rollers.

59. The process for making a filter of Claim 54 wherein said at least one set of opposing contour formers are embossing belts.

60. The process for making a filter of Claim 54 wherein said at least one set of opposing contour formers has a first set where one of said first set has at least one valley and said opposing contour former has at least one ridge, said at least one set of opposing contour formers having a second set of opposing contour formers wherein said second set of contour formers has a contour former with at least two valleys and an opposing contour former with at least two ridges.

61. The process for making a filter of Claim 60 wherein one of said first set of opposing contour formers has one valley and the other of said first set of opposing contour formers has one ridge, one of said second set of opposing contour formers has three valleys and the other of said second set of opposing contour formers has three ridges.

62. The process for making a filter of Claim 61 wherein said at least one set of opposing contour formers has a third set wherein one of said third set of opposing contour formers has five valleys and the other of said third set of opposing contour formers has five ridges.

63. The process for making a filter of Claim 54 wherein said at least one set of opposing contour formers has a final set wherein one of said final set of opposing contour formers has at least one scoring pattern substantially perpendicular to said at least one ridge or valley and the other of said final set of opposing contour formers has at least one scoring pattern that cooperates with said at least one scoring pattern on said opposing contour former to form score lines in said filter material.

64. The process for making a filter of Claim 63 wherein said scoring pattern is substantially linear and substantially perpendicular to said ridges and said valleys.

65. The process for making a filter of Claim 63 wherein said scoring pattern has an upper and lower wave pattern and a plurality of vertical linear patterns within said upper and said lower wave patterns.

66. A filter produced by the process of Claim 54.

67. A series of contour formers for filter material having at least two sets of opposing contour formers, a first set of opposing contour formers has a former with at least one first valley with a first depth and the other of said first set of opposing contour formers has at least one first ridge having a first height, said at least one first ridge having a first pitch and said at least one first valley having substantially said first pitch, said at least one set of opposing contour formers having a second set of opposing contour formers wherein said second set has a contour former with at least one second valley having a second depth and an opposing contour former with at least one second ridge having a second height, said at least one second ridge having a second pitch and said at least one second valley having substantially said second pitch, said second depth being greater than said first depth, said second height being greater than said first height, said second pitch being less than said first pitch.

68. A series of contour formers for filter material having at least two sets of opposing contour formers, said at least two sets of opposing contour formers has a first set where one of said first set has at least one valley and said opposing contour former has at least one ridge, said at least one set of opposing contour formers having a second set of opposing contour formers wherein said second set of contour formers has a contour former with at least two valleys and an opposing contour former with at least two ridges.
